# EUROPEAN PATENT SPECIFICATION

(11) **EP 1 881 566 B1**
(45) Date of publication and mention of the grant of the patent: **15.06.2011**
(21) Application number: 07014235.1
(22) Date of filing: 20.07.2007
(51) Int. Cl.: H01R 13/11, G02F 1/13357

(54) **Backlight unit and liquid crystal display device having same**
Rückbeleuchtungseinheit und Flüssigkristallanzeigevorrichtung
Unité de rétroéclairage et dispositif d'affichage à cristaux liquides

(30) Priority: 20.07.2006 KR 20060067882
(43) Date of publication of application: 23.01.2008
(73) Proprietor: Samsung Electronics Co., Ltd., Gyeonggi-do 442-742 (KR)
(72) Inventor: Lee, Sang Chul, Yongin-Si Gyeonggi-Do, 448-981 (KR)
(74) Representative: Weitzel, Wolfgang

(56) References cited:
- US-A1- 2002 186 333
- US-A1- 2004 156 183
- US-A1- 2006 072 322
- US-A1- 2006 104 094

## Description

### BACKGROUND OF THE INTENTION

### 1. Technical Field

The present invention relates to a backlight unit as defined in the preamble of claim 1.

Further the invention relates to a liquid crystal display device as defined in the preamble of independent claim 17.

### 2. Discussion of Related Art

In a liquid crystal display (LCD) device, an inverter is used to drive a backlight unit. The inverter is connected to a lamp by a variety of methods. The lamp and the inverter can be connected to each other using a wire and a connector. However, when the inverter is coupled to or detached from the lamp, the lamp must be disassembled to rework the inverter.

Instead of using the wire and connector, an inverter electrode portion can be inserted in a connector using a sliding method. In the sliding method, assembly and disassembly efficiency can be enhanced. However, a crack can be generated on the inverter electrode portion or the connector in which the inverter electrode portion is inserted. Since the inverter uses electric power of high voltage, if a crack is generated in a component of the inverter, a lamp may operate abnormally and the inverter can be burned.

US 2006/072322 A1 describes a backlight assembly as defined in the preamble of claim 1. This backlight assembly includes a U-shaped lamp and first and second connecting members, The U-shaped lamp includes a U-shaped lamp tube, a first external electrode covering a first end portion of the U-shaped lamp tube, and a second external electrode covering a second end portion of the U-shaped lamp tube. The first connecting member is electrically connected to the first external electrode for applying the first driving voltage to the first external electrode.

US 2004/156183 A1 describes a backlight assembly and an LCD apparatus having the same. A lamp-fixing member includes a base substrate, a fixing clip protruded from a base substrate so as to fix a lamp and a fixing portion formed by partially cutting-away the base substrate. A mold frame includes a receiving portion for receiving the lamp-fixing member and the receiving portion includes a fixing protrusion inserted into the fixing portion. The fixing protrusion includes a supporting portion formed at an end of the fixing protrusion and coupled to the base substrate when the lamp-fixing member is slid. The backlight unit of US 2004/156183 A1 comprises

US 2002/156333 A1 describes a liquid crystal display device having a display section for displaying images, a receiving container for receiving the display section, a power supplying section for supplying a power source to the display section, a signal converting section for converting signals from the display section and a fixing section for fixing the power supplying section and the signal converting section to the receiving container. The power supplying section and the signal converting section are disposed between the display section and the fixing section with directly facing to a rear surface of the receiving container.

US 2006/104094 A1 describes a back light assembly compriseing a light source, a power supply line, a receiving container, a fixing member and at least one connecting member. The light source generates light, and the power supply line supplies electrical power to the light source. The receiving container receives the light source. The fixing member is disposed on a rear face of the receiving container so as to attach the power supply line to the receiving container. The connecting member is disposed on the receiving container so as to couple the fixing member to the rear face of the receiving container.

### SUMMARY OF THE INVENTION

The backlight unit of the invention is defined in claim 1. Advantageous embodiments are defined in the dependent claims 2 to 16.

According to an embodiment of the present invention, the backlight unit provides a crack prevention structure for preventing a crack from being generated in an inverter unit coupled to a lamp socket.

The liquid crystal display device of the invention is defined in independent claim 17. Advantageous embodiments are defined in the dependent claims 18 and 19.

### BRIEF DESCRIPTION OF THE DRAWINGS

Exemplary embodiments of the present invention can be understood in more detail from the following descriptions taken in conjunction with the accompanying drawings, in which:
FIGS. 1A and 1B are schematic perspective and side views of a lamp socket, respectively, according to an embodiment of the present invention;
FIGS, 1C, 1D, 1E and 1F are schematic views of a lamp socket element, respectively, according to an other embodiment of the present invention.
FIG 2A is a view showing a lamp socket coupled to a lower receiving member according to an embodiment of the present invention;
FIGS. 2B and 2C are plan and perspective views, respectively, showing a lamp coupled to a lamp socket according to an embodiment of the present invention;
FIG 3 is a schematic sectional view of a lamp according to an embodiment of the present invention;
FIG_{.} 4A is a schematic perspective view of an inverter unit according to an embodiment of the present invention;
FIG. 4B is an enlarged view of a portion of FIG 4A;
FIG. 5A is a view for illustrating a process of coupling an inverter unit in a backlight unit according to an embodiment of the present invention;
FIGS. 5B and 5C are a bottom perspective view and a side view of a backlight unit, respectively, according to an embodiment of the present invention;
FIG 6 illustrates a method of coupling an inverter unit to a backlight unit according to an embodiment of the present invention;
FIG. 7 illustrates a method of coupling an inverter unit to a backlight unit according to an embodiment of the present invention;
FIG. 8A is an exploded perspective view of a liquid crystal display device having a backlight unit according to an embodiment of the present invention; and
FIG. 8B is a bottom perspective view of a lower receiving member shown in FIG. 8A according to an embodiment of the present invention.

### DETAILED DESCRIPTION OF EXEMPLARY EMBODIMENTS

Exemplary embodiments of the present invention will be described in more detail with references to the accompanying drawings. The present invention may be embodied in many different forms and should not be construed as limited to the embodiments set forth herein.

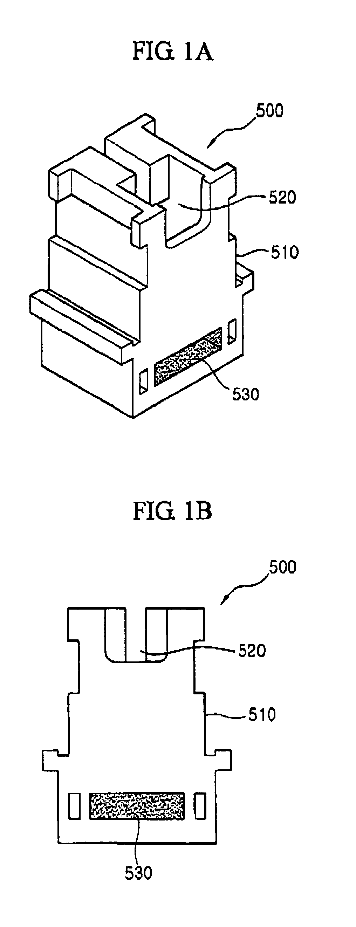

FIGS. 1A and 1B are schematic perspective and side views of a lamp socket, respectively, according to an embodiment of the present invention.

Referring to FIGS. 1A and 1B, a lamp socket 500 comprises a body 510, a first connector 520 and a second connector 530.

The first connector 520 is formed at an end of the body 510, for example, an upper end of the body. The second connector 530 is formed near the other end of the body 510, for example, a lower end of the body. The first connector 520 is provided with a space for receiving an end of a lamp. An electrode portion of the lamp is inserted into the first connector 520, thereby being electrically and mechanically coupled to the first connector 520. An electrode portion of an inverter is inserted into and connected to the second connector 530 to supply electric power to the electrode portion of the lamp connected to the first connector. The first and second connectors 520 and 530 are electrically connected to each other in the body 510. The electrode portions of the lamp and inverter are connected to each other through the first and second connectors 520 and 530 of the lamp socket 500.

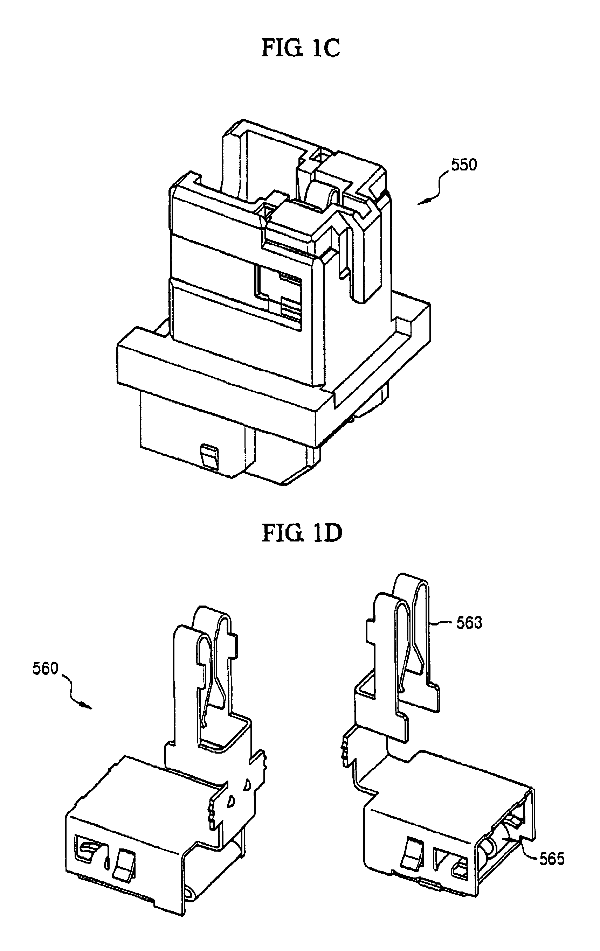

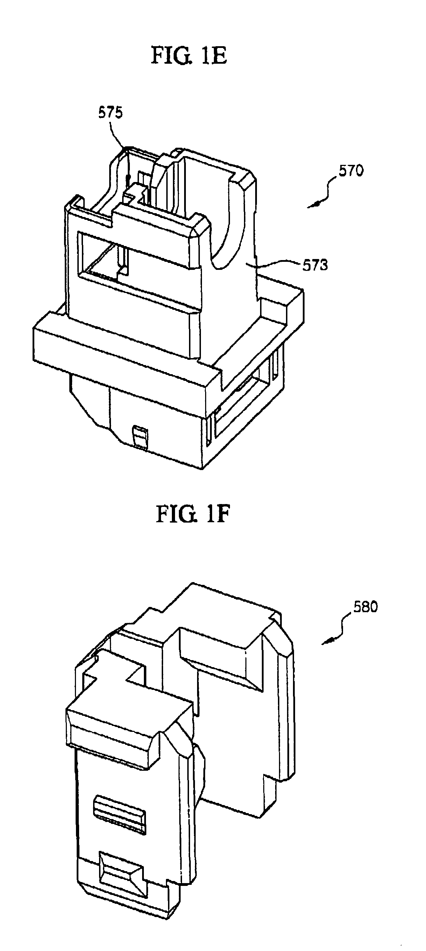

FIGS. 1C, 1D, 1E and 1F are schematic views of a lamp socket element, respectively, according to an other embodiment of the present invention.

Referring to FIGS. 1A to 1F, the lamp socket 550 includes a contact terminal 560, a housing 570 and a cover 580. The lamp socket 550 fixes a lamp (not shown) and serves as a connector for supplying power to the lamp. The contact terminal 560 includes a first contact 563 to which the electrode of the lamp is fastened and fixed, and a second contact 565 to which an inverter electrode portion of the inverter unit (not shown) is fastened and fixed. The housing 570 includes a base portion 573 having a space 575 to receive the contact terminal 560, and the contact terminal 560 is coupled to the housing 570 and the cover 580.

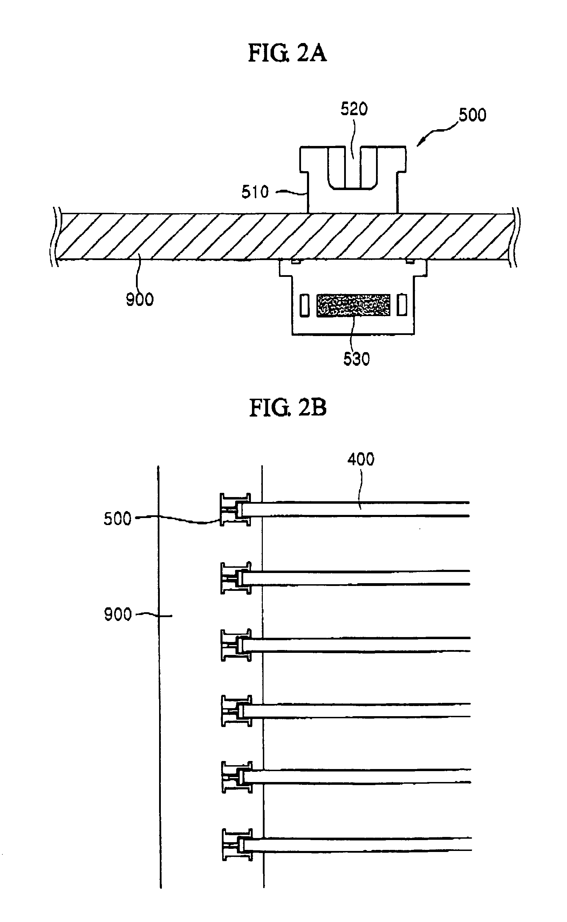

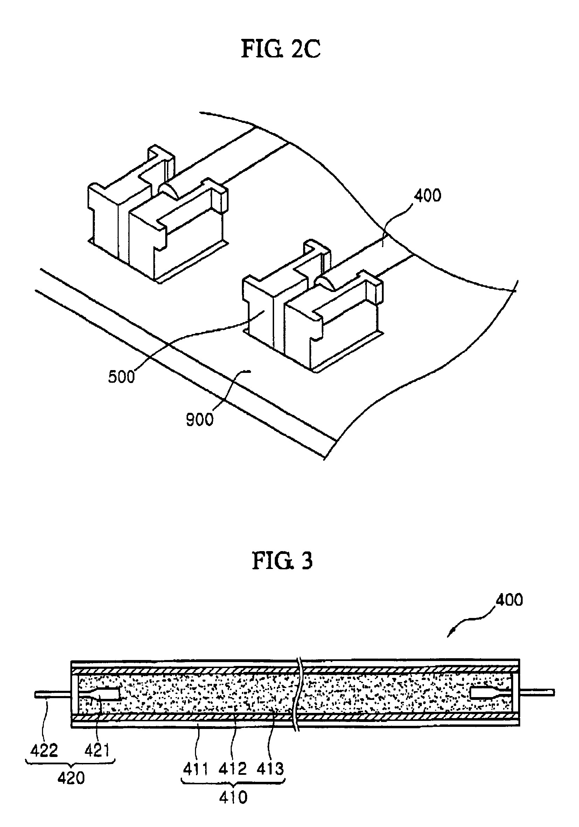

FIG 2A is a view showing the lamp socket 500 coupled to a lower receiving member according to an embodiment of the present invention, FIGS. 2B and 2C are plan and perspective views showing a lamp coupled to the lamp socket 500 according to an embodiment of the present invention. FIG 3 is a schematic sectional view of a lamp according to an embodiment of the present invention.

FIG 2A shows the lamp socket 500, which is coupled to a lower receiving member 900. An upper end portion of the lamp socket 500 on which the first connector 520 is formed is disposed on a top surface of the lower receiving member 900. A lower end portion, on which the second connector 530 is formed, is disposed on a bottom surface of the lower receiving member 900. The top surface of the lower receiving member 900 is the surface over which a receiving space is provided. The bottom surface is the surface positioned opposite the top surface. The lower receiving member 900 is formed with a hole (not shown) having a shape corresponding to the lamp socket 500. The lamp socket 500 can be fixedly inserted into the hole.

FIGS. 2B and 2C show that lamps 400 are coupled to the lamp sockets 500. Some of the lamp sockets 500 are disposed at a first side of the lower receiving member 900 to be spaced apart from each other by a predetermined interval. Some of the lamp sockets 500 are symmetrically disposed at a second side, which is opposite the first side of the lower receiving member 900.

Referring to FIG 3, each lamp 400 comprises a lamp tube 410 and electrode portions 420. The lamp tube 410 comprises a tube body 411, a phosphor layer 412 and discharge gas 413. The electrode portions 420, each of which includes a lamp electrode 421 and a lead wire 422, are disposed at both ends of the lamp tube 410, When electric power is applied to the lamp 400 through the lead wires 422 from the outside, the electric power is supplied to the lamp electrodes 421. That is, the lead wire 422 is connected to the first connector 520 of the lamp socket 500, and the electric power supplied from the outside through the second connector 530 is applied to the lamp electrode 421 through the first connector 520 and the lead wire 422. When the electric power is applied to the lamp electrodes 421, the discharge gas 413 in the lamp tube 410 is changed a plasma state and emits non-visible rays. Then, the non-visible rays stimulate the phosphor layer 412 to radiate visible rays to the outside.

In an embodiment of the present invention, the cold cathode fluorescent lamp can be employed.

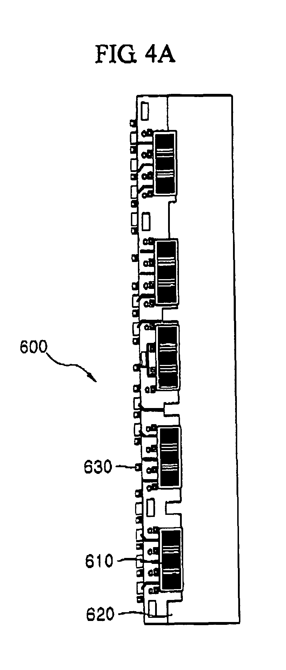

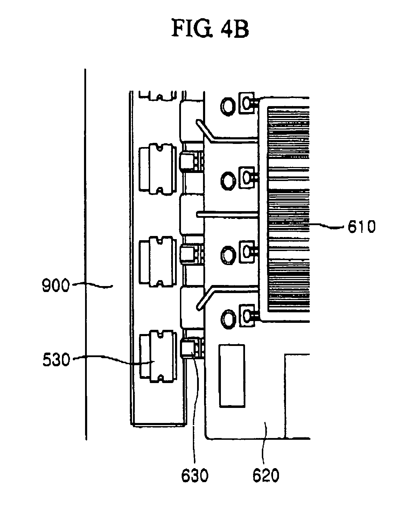

FIG 4A is a schematic perspective view of an inverter unit according to an embodiment of the present invention. FIG 4B is an enlarged view of a portion of FIG 4A.

Referring to FIGS. 4A and 4B, an inverter unit 600 comprises inverters 610, an inverter printed circuit board 620 and inverter electrode portions 630.

Since the cold cathode fluorescent lamp operates using an alternating voltage, to operate the cold cathode fluorescent lamp, the inverter 610 converts a direct voltage supplied from the outside into an alternating voltage and outputs the alternating voltage.

The inverter printed circuit board 620 is formed with a circuit pattern and the inverter 610 is mounted on the inverter printed circuit board 620. The inverter printed circuit board 620 may be further mounted with a transformer (not shown) for converting a level of the output alternating voltage, a controller (not shown) for controlling an operation of the inverter 610 and other components.

The inverter electrode portion 630, which is an output terminal through which the alternating voltage converted through the inverter 610 is output, is formed in an end of the inverter printed circuit board 620. The inverter electrode portion 630 is electrically connected to the inverter 610 through the circuit patterns (not shown). The inverter electrode portion 630 is inserted into and connected to the second connectors 530 of the lamp sockets 500 disposed on the bottom surface of the lower receiving member 900.

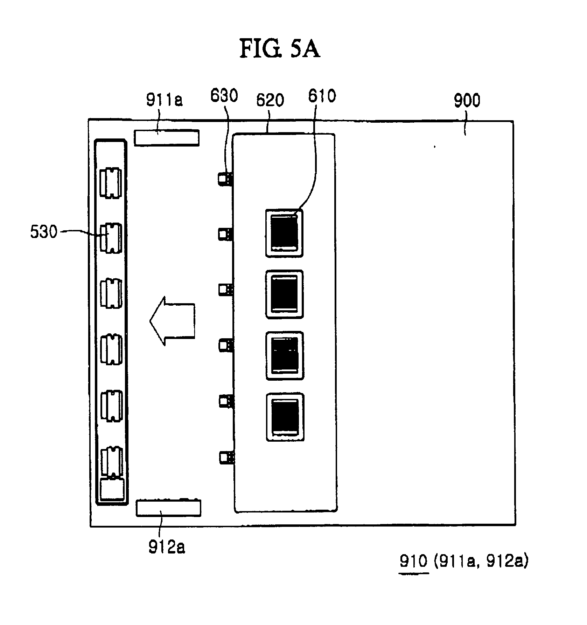

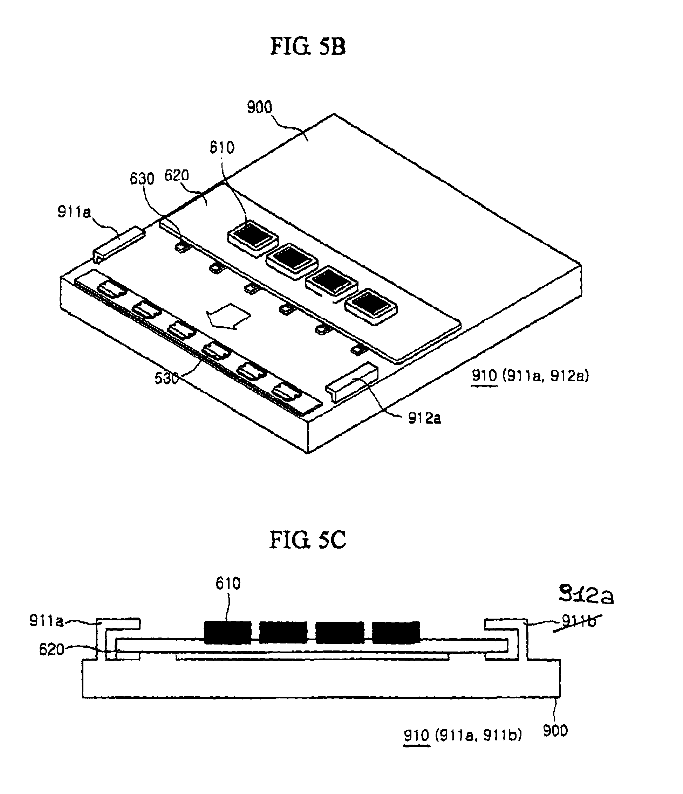

FIG. 5A is a view for illustrating a process of coupling the inverter unit 600 in a backlight unit according to an embodiment of the present invention. FIGS. 5B and 5C are a bottom perspective view and a side view of the backlight unit, respectively, according to an embodiment of the present invention.

Referring to FIGS. 5A to 5C, a guide portion 910 is formed on the bottom surface of the lower receiving member 900 to guide a route along which the inverter unit 600 is coupled to or detached from the second connectors 530 of the lamp sockets 500.

In an embodiment, the guide portion 910 comprises first and second guides 911 a 912a respectively formed on upper and lower end portions of the bottom surface of the lower receiving member 900. In an embodiment, the first and second guides 911a and 912a can be respectively formed on an upper left end portion and a lower left end portion of the bottom surface of the lower receiving member 900. The second connectors 530 of the lamp sockets 500 can be disposed in the left and right sides of the lower receiving member 900, respectively. The second connectors 530 disposed in the right side are omitted in these figures.

Each of the first and second guides 911 a and 912a is formed to have, for example, an L-shaped cross section. That is, the first and second guides 911 a and 912a are formed to have vertical sections and horizontal sections. The vertical sections are vertically extended from the bottom surface of the lower receiving member 900. The horizontal sections are horizontally extended from the distal ends of the first sections toward each other to be parallel with the bottom surface of the lower receiving member 900.

In an embodiment of the present invention, the guide portion 910 and the lower receiving member 900 can be integrally formed. In an embodiment of the present invention, a length of each vertical section of the first and second guides 911a and 912a (that is, a height of the first and second guides 911a and 912a) can be slightly larger than a thickness of the inverter printed circuit board 620, and each horizontal section of the first and second guides 911 a and 912a extends to partially cover each upper and lower end of the inverter printed circuit board 620. In an embodiment of the present invention, a distance between the vertical sections of the first and second guides 911a and 912a may correspond to a width of the inverter printed circuit board 620.

The inverter unit 600 moves in a sliding manner in the left direction along the guide portion 910 toward the second connectors 530 disposed in the left side of the lower receiving member 900, so that the inverter electrode portion 630 is inserted into the second connectors 530 and electrically and mechanically connected to the second connectors 530.

If the inverter unit 600 moves along the guide portion 910 and the inverter electrode portions 630 are inserted into the second connectors 530 of the lamp sockets 500, the inverter printed circuit board 620 of the inverter unit 600 is prevented from floating by the guide portion 910. Thus, a crack can be prevented from being generated on the inverter electrode portion 630 or the second connector 530.

In an embodiment of the present invention, the guide portion 910 can be formed near the second connectors 530 disposed in the left or left end side of the lower receiving member 900. In an embodiment of the present invention, the guide portion 910 may be formed near the second connectors 530 disposed on the right side of the lower receiving member 900. In an embodiment, the guide portion 910 can be formed in both the right and left sides of the lower receiving member 900. The inverter unit 600 may be inserted into the second connectors 530 disposed on the left end side, on the right end side or on the left and right end sides of the lower receiving member 900.

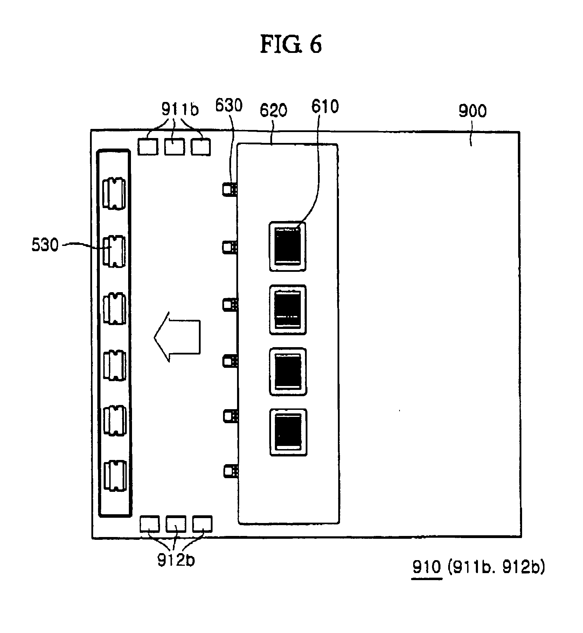

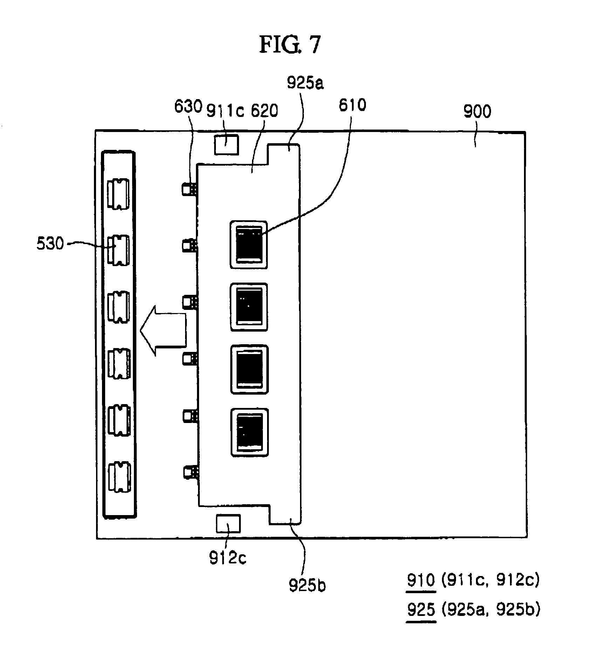

FIGS. 6 and 7 are views illustrating a method of coupling the inverter unit 600 to a backlight unit according to embodiments of the present invention. The configurations of the embodiments shown in FIGS. 6 and 7 are similar to those of the embodiment illustrated in connection with FIGS. 5A-5C, except for the guide portion 910. Referring to FIG 6, the guide portion 910 is formed on the bottom surface of the lower receiving member 900 to guide the inverter unit 600 so that the inverter unit 600 can be coupled to or detached from the second connectors 530 of the lamp sockets 500. The guide portion 910 may include three first guides 911b formed on an upper left side of the bottom surface of the lower receiving member 900 and three second guides 912b formed on a lower left side of the bottom surface of the lower receiving member 900 according to an embodiment of the present invention. In an embodiment of the present invention, the first guides 911b and the second guides 912b can be formed on an upper right side and a lower right side of the bottom surface of the lower receiving member 900. The first guides 911b are spaced apart from each other by an interval, and the second guides 912b are also spaced apart from each other by an interval. Each of the first and second guides 911b and 912b is formed to have, for example, an L-shaped cross section. In an embodiment of the present invention, the number of the first or second guides 911 b and 912b can vary.

Referring to FIG 7, the guide portion 910 is formed on the bottom surface of the lower receiving member 900 to guide the inverter unit 600 so that the inverter unit 600 can be coupled to or detached from the second connectors 530 of the lamp sockets 500. The guide portion 910 includes a first guide 911c formed on an upper end side, for example, an upper left end side of the bottom surface of the lower receiving member 900 and a second guide 912c formed on a lower end side, for example, a lower left end side of the bottom surface of the lower receiving member 900 according to an embodiment of the present invention. Each of the first and second guides 911c and 912c is formed to have, for example, an L-shaped cross section.

Protrusions 925a and 925b are respectively formed on both top and bottom ends of the inverter printed circuit board 620. The first and second guides 911c and 912c are configured such that the first and second guides 911c and 912c can receive the protrusions 925a and 925b when the inverter unit 600 is inserted into the second connectors 530,

If the inverter unit 600 moves along the first and second guides 911c and 911c and then the inverter unit 600 is inserted into the second connectors 530 of the lamp sockets 500, the protrusions 925a and 925b formed on both the top and bottom ends of the inverter printed circuit board 620 of the inverter unit 600 are prevented from floating by the guide portion 910, whereby the entire inverter printed circuit board 620 is also prevented from floating. As a result, a crack can be prevented from being generated on the inverter electrode portion 630 or the second connector 530.

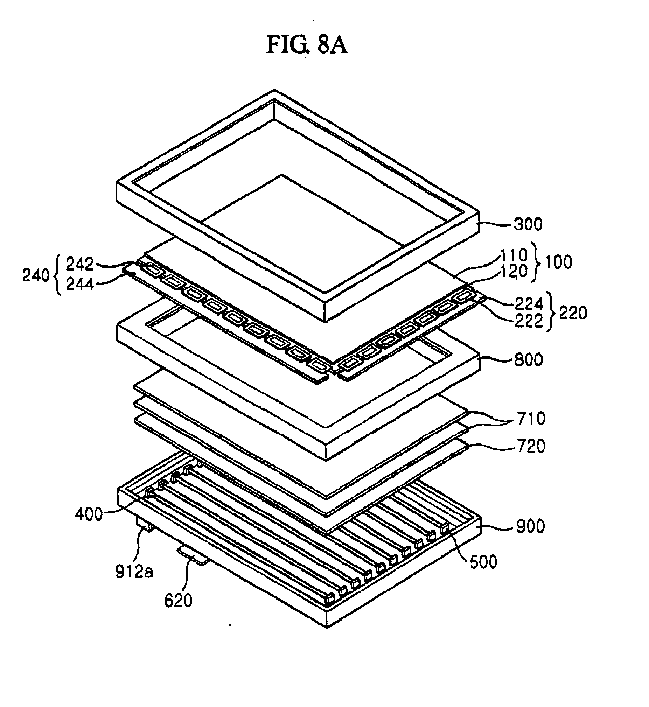

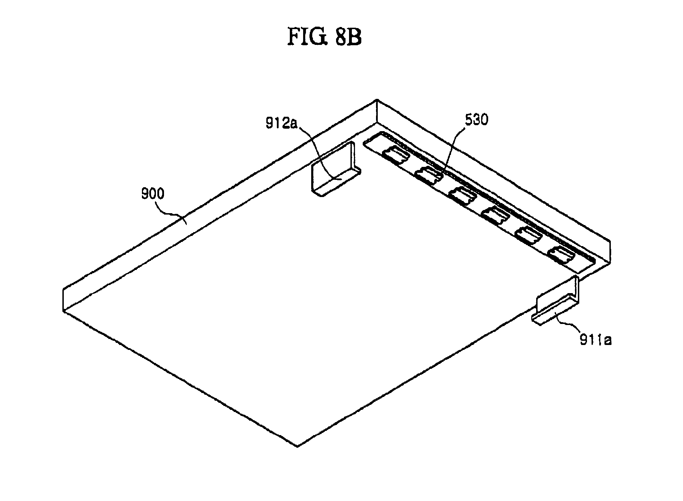

FIG 8A is an exploded perspective view of a liquid crystal display device having a backlight unit according to an embodiment of the present invention. FIG 8B is a bottom perspective view of a lower receiving member shown in FIG. 8A.

Referring to FIGS. 8A and 8B, the liquid crystal display device comprises an upper receiving member 300, a liquid crystal display (LCD) panel 100, driving circuit units 220 and 240, a mold frame 800, a plurality of optical sheets 710, a diffusion plate 720, lamps 400 and a lower receiving member 900.

A first driving circuit unit 220 comprises a gate side printed circuit board 224 connected to the LCD panel 100 and having a control integrated circuit (IC) mounted on the gate side printed circuit board 224 to apply a gate signal to a gate line of a thin film transistor (TFT) substrate 120. A second driving circuit unit 240 includes a data side printed circuit board 244 connected to the LCD panel 100 and having a control IC mounted on the data side printed circuit board 244 to apply a data signal to a data line of the TFT substrate 120. The second driving circuit unit 220 includes a gate side flexible printed circuit board 222 for connecting the TFT substrate 120 and the gate side printed circuit board 224. The first driving circuit unit 240 includes a data side flexible printed circuit board 242 for connecting the TFT substrate 120 and the data side printed circuit board 244.

The gate and data side printed circuit boards 224 and 244 are connected to the gate and data side flexible printed circuit boards 222 and 242, respectively, to apply gate driving signals and external image signals. According to an embodiment of the present invention, the gate and data side printed circuit boards 224 and 244 may be integrated to form a single printed circuit board. Driving ICs (not shown) can be mounted to the flexible printed circuit boards 222 and 242 to transmit, for example, red, green and blue (R, G, B) signals or power generated in the printed circuit boards 224 and 244 to the liquid crystal panel 100.

The upper receiving member 300 can be formed, for example, in a rectangular frame shape having flat and side wall sections, which have a perpendicularly-bent shape, to prevent the liquid crystal display panel 100 and the driving circuit units 220 and 240 from being deviated. The upper receiving member 300 protects the liquid crystal panel 100 and the driving circuit units 220 and 240 against a shock applied from the outside.

The plurality of optical sheets 710, the diffusion plate 720, one or more lamps 400 and the reflection plate 600 are stacked sequentially to be received by the mold frame 800. The lower receiving member 900 is provided to be coupled to the mold frame 800 and support other components,

The lamp sockets 500 can be fixedly coupled to both opposite sides of the lower receiving member 900. The lamps 400 are connected to the first connectors 520 formed in the upper end portions of the lamp sockets 500 and the inverter unit 600 is connected to the second connectors 530 formed in the lower end portions. The guide portion 910 (911a and 912a, 911b and 912b, or 911c and 912c) is formed on the bottom surface of the lower receiving member 900 to guide the inverter unit 600 so that the inverter unit 600 can be coupled to or detached from the second connectors 530 of the lamp sockets 500.

According to an embodiment of the present invention, the guide portion is formed on the lower receiving member of the backlight unit to guide the inverter unit so that the inverter unit can be coupled to or detached from the lower receiving member. As a result, the inverter unit is prevented from floating when the inverter unit is coupled to or detached from the connector of the lamp socket in a sliding manner. Thus, a crack or damage can be prevented from being generated on the inverter.

## Claims

1. A backlight unit, comprising:
a receiving member (900);
a lamp socket (500; 550) disposed in the receiving member (900);
a lamp (400) coupled to the lamp socket (500; 550); and
an inverter unit (600) coupled to the lamp socket (500; 550) to supply electric power to the lamp (400), **characterized in that**
the receiving member (900) further comprises a guide portion (910) for guiding the inverter unit (600), and
the lamp socket (500; 550) comprises a body (510), a first connector (520) formed in a first end of the body (510), and a second connector (530) formed in a second end of the body (510), wherein the first connector (520) connects to the lamp (400) and the second connector (530) connects to the inverter unit (600).

2. The backlight unit of claim 1, wherein the first connector (520) of the lamp socket (500; 550) is disposed on a first surface of the receiving member (900) and the second connector (530) is disposed on a second surface of the receiving member (900).

3. The backlight unit of claim 1, wherein a first portion of the lamp socket (500; 550) is disposed on a first side of the receiving member (900) and a second portion of the lamp socket (500; 550) is disposed on a second side of the receiving member (900).

4. The backlight unit of claim 1, wherein the lamp (400) comprises a lamp tube (410) having a discharge gas (413) and a phosphor layer (412), and electrode portions (420) provided at both ends of the lamp tube (410).

5. The backlight unit of claim 4, wherein the electrode portion is coupled to the first connector (520) of the lamp socket (500; 550).

6. The backlight unit of claim 1 wherein the inverter unit (600) comprises an inverter (610), an inverter printed circuit board (620) having the inverter (810) mounted thereon, and an inverter electrode portion (630) formed in an end of the inverter printed circuit board (620).

7. The backlight unit of claim 6, wherein the inverter electrode portion (630) is connected to the second connector (530) of the lamp socket (500; 550).

8. The backlight unit of claim 6, wherein the inverter electrode portion (630) is formed at the end of the inverter printed circuit board (620) to protrude the second connector (530) of the receiving member (900).

9. The backlight unit of claim 6, wherein the inverter printed circuit board (620) has protrusions (925a, 925b) formed at both top and bottom ends of the inverter printed circuit board (620) to be received by a corresponding guide portion (910) of the receiving member (900).

10. The backlight unit of claim 1, wherein the guide portion (910) comprises a first guide (911a; 911b; 911c) formed at a first side of the receiving member (900), and a second guide (912a; 912b; 812c) formed at a second side of the receiving member (900), wherein the second guide (912a; 912b; 912c) is formed opposite the first guide (911a; 911 b; 911c).

11. The backlight unit of claim 10, wherein each of the first and second guides (911a; 911b; 911c; 912a; 912b; 912c) is bent into a predetermined shape.

12. The backlight unit of claim 11, wherein the predetermined shape has an L-shaped cross section.

13. The backlight unit of claim 10, wherein the guide portion (910) and the receiving member (900) are integrally formed.

14. The backlight unit of claim 10, wherein the guide portion (910) comprises a plurality of first guides (911a; 911b; 811c) and a plurality of second guides (912a; 912b; 912c), the plurality of first guides (911a; 911 b; 911c) are spaced apart from each other by an Interval and the plurality of second guides (912a; 912b; 912c) are spaced apart from each other by an interval.

15. The backlight unit of claim 1, wherein the inverter unit (600) is moved in a sliding manner, and is inserted into the second connectors (530).

16. The backlight unit of claim 1, wherein the lamp socket (500) comprises a contact terminal (560), a housing (570) and a cover (580), and
wherein the contact terminal (560) includes a first contact (563) and a second contact (565), and the housing (570) includes a base portion (573) having a space to receive the contact terminal (560), and
wherein the lamp (400) is fastened and fixed to the first contact (563), an inverter electrode portion (630) of the inverter unit (600) is fastened and fixed to the second contact (565), and the contact terminal (560) is coupled to the housing (570) and the cover (580).

17. A liquid crystal display device, comprising;
a liquid crystal display panel (100) for displaying an image; and
a backlight unit including a receiving member (900), a lamp socket (500; 550) disposed in the receiving member (900), a lamp (400) coupled to the lamp socket (500; 550), and an inverter unit (600) coupled to the lamp socket (500; 550) to supply electric power to the lamp (400),
wherein the receiving member (900) further comprises a guide portion (910) for guiding the inverter unit (600),
**characterized in that**
the lamp socket (500; 550) comprises a body (510), a first connector (520) formed in a first end of the body (510), and a second connector (530) formed in a second end of the body (510), wherein the first connector (520) connects to the lamp (400) and the second connector (530) connects to the inverter unit (600).

18. The liquid crystal display device of claim 17, wherein the inverter unit (600) is moved in a sliding manner, and is inserted into the second connectors (530).

19. The liquid crystal display device of claim 17, wherein the lamp socket (500; 550) comprises a contact terminal (560), a housing (570) and a cover (580), and
wherein the contact terminal (560) includes a first contact (563) and a second contact (565), and the housing (570) includes a base portion (573) having a space to receive the contact terminal (560), and
wherein the lamp (400) is fastened and fixed to the first contact (563), an inverter electrode portion (630) of the inverter unit (600) is fastened and fixed to the second contact (565), and the contact terminal (560) is coupled to the housing (570) and the cover (580).

## Patentansprüche

1. Hintergrundbeleuchtungseinheit, umfassend:
ein Aufnahmeelement (900);
eine Lampenfassung (500; 550), die im Aufnahmeelement (900) angeordnet ist;
eine Lampe (400), die mit der Lampenfassung (500; 550) gekoppelt ist; und
eine Invertereinheit (600), die mit der Lampenfassung (500; 550) gekoppelt ist, um elektrische Energie an die Lampe (400) zu liefern, **dadurch gekennzeichnet, dass**
das Aufnahmeelement (900) darüber hinaus einen Führungsabschnitt (910) zum Führen der Invertereinheit (600) umfasst, und
die Lampenfassung (500; 550) Folgendes umfasst: einen Körper (510), einen ersten Anschlussteil (520), der in einem ersten Ende des Körpers (510) gebildet ist, und einen zweiten Anschlussteil (530), der in einem zweiten Ende des Körpers (510) gebildet ist, wobei der erste Anschlussteil (520) mit der Lampe (400) verbindet und der zweite Anschlussteil (530) mit der Invertereinheit (600) verbindet.

2. Hintergrundbeleuchtungseinheit nach Anspruch 1, wobei der erste Anschlussteil (520) der Lampenfassung (500; 550) an einer ersten Fläche des Aufnahmeelements (900) angeordnet ist und der zweite Anschlussteil (530) an einer zweiten Fläche des Aufnahmeelements (900) angeordnet ist.

3. Hintergrundbeleuchtungseinheit nach Anspruch 1, wobei ein erster Abschnitt der Lampenfassung (500; 550) an einer ersten Seite des Aufnahmeelements (900) angeordnet ist und ein zweiter Abschnitt der Lampenfassung (500; 550) an einer zweiten Seite des Aufnahmeelements (900) angeordnet ist.

4. Hintergrundbeleuchtungseinheit nach Anspruch 1, wobei die Lampe (400) ein Lampenrohr (410) mit einem Entladungsgas (413) und einer Phosphorschicht (412) sowie Elektrodenabschnitte (420) umfasst, die an beiden Enden des Lampenrohrs (410) angeordnet sind.

5. Hintergrundbeleuchtungseinheit nach Anspruch 4, wobei der Elektrodenabschnitt mit dem ersten Anschlussteil (520) der Lampenfassung (500; 550) gekoppelt ist.

6. Hintergrundbeleuchtungseinheit nach Anspruch 1, wobei die Invertereinheit (600) Folgendes umfasst: einen Inverter (610), eine Inverter-Leiterplatte (620) mit dem darauf montierten Inverter (610) und einen Inverter-Elektrodenabschnitt (630), der in einem Ende der Inverter-Leiterplatte (620) gebildet ist.

7. Hintergrundbeleuchtungseinheit nach Anspruch 6, wobei der Inverter-Elektrodenabschnitt (630) mit dem zweiten Anschlussteil (530) der Lampenfassung (500; 550) verbunden ist.

8. Hintergrundbeleuchtungseinheit nach Anspruch 6, wobei der Inverter-Elektrodenabschnitt (630) derart am Ende der Inverter-Leiterplatte (620) gebildet ist, dass er vom zweiten Anschlussteil (530) des Aufnahmeelements (900) vorragt.

9. Hintergrundbeleuchtungseinheit nach Anspruch 6, wobei die Inverter-Leiterplatte (620) Vorsprünge (925a; 925b) aufweist, die am oberen und unteren Ende der Inverter-Leiterplatte (620) gebildet sind, um von einem entsprechenden Führungsabschnitt (910) des Aufnahmeelements (900) aufgenommen zu werden.

10. Hintergrundbeleuchtungseinheit nach Anspruch 1, wobei der Führungsabschnitt (910) umfasst: eine erste Führung (911a; 911b; 911c), die an einer ersten Seite des Aufnahmeelements (900) gebildet ist, und eine zweite Führung (912a; 912b; 912c), die an einer zweiten Seite des Aufnahmeelements (900) gebildet ist, wobei die zweite Führung (912a; 912b; 912c) der ersten Führung (911a; 911b; 911c) gegenüberliegend gebildet ist.

11. Hintergrundbeleuchtungseinheit nach Anspruch 10, wobei die ersten und zweiten Führungen (911a; 911b; 911c; 912a; 912b; 912c) jeweils in eine vorbestimmte Form gebogen sind.

12. Hintergrundbeleuchtungseinheit nach Anspruch 11, wobei die vorbestimmte Form einen L-förmigen Querschnitt aufweist.

13. Hintergrundbeleuchtungseinheit nach Anspruch 10, wobei der Führungsabschnitt (910) und das Aufnahmeelement (900) einstückig ausgebildet sind.

14. Hintergrundbeleuchtungseinheit nach Anspruch 10, wobei der Führungsabschnitt (910) eine Vielzahl von ersten Führungen (911a; 911b; 911c) und eine Vielzahl von zweiten Führungen (912a; 912b; 912c) umfasst, wobei die Vielzahl von ersten Führungen (911a; 911b; 911c) durch einen Zwischenraum voneinander beabstandet sind und die Vielzahl von zweiten Führungen (912a; 912b; 912c) durch einen Zwischenraum voneinander beabstandet sind.

15. Hintergrundbeleuchtungseinheit nach Anspruch 1, wobei die Invertereinheit (600) auf gleitende Weise bewegt wird und in die zweiten Anschlussteile (530) eingefügt wird.

16. Hintergrundbeleuchtungseinheit nach Anspruch 1, wobei die Lampenfassung (500) eine Anschlussklemme (560), ein Gehäuse (570) und eine Abdeckung (580) umfasst und
wobei die Anschlussklemme (560) einen ersten Kontakt (563) und einen zweiten Kontakt (565) umfasst und das Gehäuse (570) einen Basisteil (573) umfasst, der einen Raum aufweist, um die Anschlussklemme (560) aufzunehmen, und
wobei die Lampe (400) am ersten Kontakt (563) befestigt und fixiert ist, ein Inverter-Elektrodenabschnitt (630) der Invertereinheit (600) am zweiten Kontakt (565) befestigt und fixiert ist und die Anschlussklemme (560) an das Gehäuse (570) und die Abdeckung (580) gekoppelt ist.

17. Flüssigkristallanzeigevorrichtung, umfassend:
ein Flüssigkristallanzeigefeld (100) zum Anzeigen eines Bilds; und
eine Hintergrundbeleuchtungseinheit mit einem Aufnahmeelement (900),
einer Lampenfassung (500; 550), die im Aufnahmeelement (900) angeordnet ist, einer Lampe (400), die mit der Lampenfassung (500; 550) gekoppelt ist, und einer Invertereinheit (600), die mit der Lampenfassung (500; 550) gekoppelt ist, um elektrische Energie an die Lampe (400) zu liefern,
wobei das Aufnahmeelement (900) darüber hinaus einen Führungsabschnitt (910) zum Führen der Invertereinheit (600) umfasst,
**dadurch gekennzeichnet, dass**
die Lampenfassung (500; 550) Folgendes umfasst: einen Körper (510),
einen ersten Anschlussteil (520), der in einem ersten Ende des Körpers (510) gebildet ist, und einen zweiten Anschlussteil (530), der in einem zweiten Ende des Körpers (510) gebildet ist, wobei der erste Anschlussteil (520) mit der Lampe (400) verbindet und der zweite Anschlussteil (530) mit der Invertereinheit (600) verbindet.

18. Flüssigkristallanzeigevorrichtung nach Anspruch 17, wobei die Invertereinheit (600) auf gleitende Weise bewegt wird und in die zweiten Anschlussteile (530) eingefügt wird.

19. Flüssigkristallanzeigevorrichtung nach Anspruch 17, wobei die Lampenfassung (500; 550) eine Anschlussklemme (560), ein Gehäuse (570) und eine Abdeckung (580) umfasst und
wobei die Anschlussklemme (560) einen ersten Kontakt (563) und einen zweiten Kontakt (565) umfasst und das Gehäuse (570) einen Basisteil (573) umfasst, der einen Raum aufweist, um die Anschlussklemme (560) aufzunehmen, und
wobei die Lampe (400) am ersten Kontakt (563) befestigt und fixiert ist, ein Inverter-Elektrodenabschnitt (630) der Invertereinheit (600) am zweiten Kontakt (565) befestigt und fixiert ist und die Anschlussklemme (560) an das Gehäuse (570) und die Abdeckung (580) gekoppelt ist.

## Revendications

1. Unité de rétro-éclairage comprenant :
un élément récepteur (900) ;
un culot de lampe (500 ; 550) disposé sur l'élément récepteur (900) ;
une lampe (400) couplée au culot de lampe (500 ; 550) ; et
une unité d'inverseur (600) couplée au culot de lampe (500 ; 550) pour fournir de l'énergie électrique à la lampe (400),
**caractérisée en ce que** l'élément récepteur (900) comprend en outre une partie de guidage (910) pour guider l'unité d'inverseur (600), et
le culot de lampe (500 ; 550) comprend un corps (510), un premier connecteur (520) formé dans une première extrémité du corps (510) et un deuxième connecteur (530) formé dans une deuxième extrémité du corps (510), le premier connecteur (520) se connectant à la lampe (400) et le deuxième connecteur (530) se connectant à l'unité d'inverseur (600).

2. Unité de rétro-éclairage selon la revendication 1, dans laquelle le premier connecteur (520) du culot de lampe (500 ; 550) est disposé sur une première surface de l'élément récepteur (900) et le deuxième connecteur (530) est disposé sur une deuxième surface de l'élément récepteur (900).

3. Unité de rétro-éclairage selon la revendication 1, dans laquelle une première partie du culot de lampe (500 ; 550) est disposée sur un premier côté de l'élément récepteur (900) et une deuxième partie du culot de lampe (500 ; 550) est disposée sur un deuxième côté de l'élément récepteur (900).

4. Unité de rétro-éclairage selon la revendication 1, dans laquelle la lampe (400) comprend un tube de lampe (410) contenant un gaz de décharge (413) et une couche de phosphore (412), ainsi que des parties formant électrodes (420) prévues aux deux extrémités du tube de lampe (410).

5. Unité de rétro-éclairage selon la revendication 4, dans laquelle la partie formant électrode est couplée au premier connecteur (520) du culot de lampe (500 ; 550).

6. Unité de rétro-éclairage selon la revendication 1, dans laquelle l'unité d'inverseur (600) comprend un inverseur (610), une carte de circuits imprimés d'inverseur (620) sur laquelle l'inverseur (610) est monté, et une partie formant électrode d'inverseur (630) montée dans une extrémité de la carte de circuits imprimés d'inverseur (620).

7. Unité de rétro-éclairage selon la revendication 6, dans laquelle la partie formant électrode d'inverseur (630) est connectée au deuxième connecteur (530) du culot de lampe (500 ; 550).

8. Unité de rétro-éclairage selon la revendication of 6, dans laquelle la partie formant électrode d'inverseur (630) est formée à l'extrémité de la carte de circuits imprimés d'inverseur (620) de façon à dépasser du deuxième connecteur (530) de l'élément récepteur (900).

9. Unité de rétro-éclairage selon la revendication 6, dans laquelle la carte de circuits imprimés d'inverseur (620) possède des saillies (925a, 925b) formées aux extrémités supérieure et inférieure de la carte de circuits imprimés d'inverseur (620) pour être reçues par une partie de guidage (910) correspondante de l'élément récepteur (900).

10. Unité de rétro-éclairage selon la revendication selon la revendication 1, dans laquelle la partie de guidage (910) comprend un premier guide (911a ; 911b ; 911c) formé sur un premier côté de l'élément récepteur (900), et un deuxième guide (912a ; 912b ; 912c) formé sur un deuxième côté de l'élément récepteur (900), le deuxième guide (912a ; 912b ; 912c) étant formé à l'opposé du premier guide (911a ; 911b ; 911c).

11. Unité de rétro-éclairage selon la revendication 10, dans laquelle chacun des premier et deuxième guides (911a ; 911b ; 911c ; 912a ; 912b ; 912c) est plié selon une forme prédéterminée.

12. Unité de rétro-éclairage selon la revendication 11, dans laquelle la forme prédéterminée a une section en forme de L.

13. Unité de rétro-éclairage selon la revendication 10, dans laquelle la partie de guidage (910) et l'élément récepteur (900) sont formés d'un seul tenant.

14. Unité de rétro-éclairage selon la revendication 10, dans laquelle la partie de guidage (910) comprend une pluralité de premiers guides (911a ; 911b ; 911c) et une pluralité de deuxièmes guides (912a ; 912b ; 912c), la pluralité de premiers guides (911a ; 911b ; 911c) étant écartés les uns des autres d'un intervalle et la pluralité de deuxièmes guides (912a ; 912b ; 912c) étant écartés les uns des autres d'un intervalle.

15. Unité de rétro-éclairage selon la revendication 1, dans laquelle l'unité d'inverseur (600) est déplacée de manière coulissante et est insérée dans les deuxièmes connecteurs (530).

16. Unité de rétro-éclairage selon la revendication 1, dans laquelle le culot de lampe (500) comprend une borne de contact (560), un logement (570) et un couvercle (580), et
dans laquelle la borne de contact (560) comprend un premier contact (563) et un deuxième contact (565), et le logement (570) comprend une partie de base (573) avec un espace pour recevoir la borne de contact (560), et dans laquelle la lampe (400) est attachée et fixée au premier contact (563), une partie formant électrode d'inverseur (630) de l'unité d'inverseur (600) est attachée et fixée au deuxième contact (565), et la borne de contact (560) est couplée au logement (570) et au couvercle (580).

17. Dispositif d'affichage à cristaux liquides, comprenant :
un panneau d'affichage à cristaux liquides (100) pour afficher une image ; et
une unité de rétro-éclairage comprenant un élément récepteur (900), un culot de lampe (500 ; 550) disposé dans l'élément récepteur (900), une lampe (400) couplée au culot de lampe (500 ; 550) et une unité d'inverseur (600) couplée au culot de lampe (500 ; 550) pour fournir de l'énergie électrique à la lampe (400),
dans lequel l'élément récepteur (900) comprend en outre une partie de guidage (910) pour guider l'unité d'inverseur (600),
**caractérisé en ce que** le culot de lampe (500 ; 550) comprend un corps (510), un premier connecteur (520) formé dans une première extrémité du corps (510) et un deuxième connecteur (530) formé dans une deuxième extrémité du corps (510), le premier connecteur (520) se connectant à la lampe (400) et le deuxième connecteur (530) se connectant à l'unité d'inverseur (600).

18. Dispositif d'affichage à cristaux liquides selon la revendication 17, dans lequel l'unité d'inverseur (600) est déplacée de façon coulissante et est insérée dans les deuxièmes connecteurs (530).

19. Dispositif d'affichage à cristaux liquides selon la revendication 17, dans lequel le culot de lampe (500 ; 550) comprend une borne de contact (560), un logement (570) et une couvercle (580), et
dans lequel la borne de contact (560) comprend un premier contact (563) et un deuxième contact (565), et le logement (570) comprend une partie de base (573) avec un espace pour recevoir la borne de contact (560), et dans lequel la lampe (400) est attachée et fixée au premier contact (563), une partie formant électrode d'inverseur (630) de l'unité d'inverseur (600) est attachée et fixée au deuxième contact (565), et la borne de contact (560) est couplée au logement (570) et au couvercle (580).
